(19) Europäisches Patentamt / European Patent Office / Office européen des brevets

(11) **EP 4 506 961 B1**

(12) **EUROPEAN PATENT SPECIFICATION**

(45) Date of publication and mention
of the grant of the patent:
**15.07.2026 Bulletin 2026/29**

(21) Application number: **22934774.5**

(22) Date of filing: **27.10.2022**

(51) International Patent Classification (IPC):
**G21C 17/10** (2006.01)    **G21C 17/104** (2006.01)
**G21C 17/108** (2006.01)    **G21D 3/00** (2006.01)

(52) Cooperative Patent Classification (CPC):
**G21C 17/104; G21C 17/10; G21C 17/108;
G21D 3/001;** Y02E 30/30

(86) International application number:
**PCT/CN2022/127831**

(87) International publication number:
**WO 2023/184956 (05.10.2023 Gazette 2023/40)**

(54) **POWER DISTRIBUTION MEASUREMENT METHOD, APPARATUS AND SYSTEM FOR NUCLEAR POWER PLANT**

VERFAHREN, VORRICHTUNG UND SYSTEM ZUR MESSUNG DER LEISTUNGSVERTEILUNG FÜR EIN KERNKRAFTWERK

PROCÉDÉ, APPAREIL ET SYSTÈME DE MESURE DE DISTRIBUTION DE PUISSANCE POUR CENTRALE NUCLÉAIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.04.2022 CN 202210343668**

(43) Date of publication of application:
**12.02.2025 Bulletin 2025/07**

(73) Proprietors:
• **China Nuclear Power Engineering Co., Ltd.**
**Shenzhen, Guangdong 518124 (CN)**
• **China General Nuclear Power Corporation**
**Shenzhen, Guangdong 518028 (CN)**
• **CGN Power Co., Ltd.**
**Shenzen, Guangdong 518028 (CN)**

(72) Inventors:
• **LI, Junde**
**Shenzhen, Guangdong 518124 (CN)**
• **XIAO, Jing**
**Shenzhen, Guangdong 518124 (CN)**
• **ZHAO, Yuntao**
**Shenzhen, Guangdong 518124 (CN)**
• **JIN, Chengyi**
**Shenzhen, Guangdong 518124 (CN)**
• **LIU, Jikun**
**Shenzhen, Guangdong 518124 (CN)**

(74) Representative: **Greaves Brewster LLP
Copa House
Station Road
Cheddar, Somerset BS27 3AH (GB)**

(56) References cited:
EP-A1- 3 965 121          CN-A- 101 840 737
CN-A- 103 617 816          CN-A- 103 871 511
CN-A- 106 128 529          CN-A- 107 887 043
CN-A- 107 910 083          CN-A- 108 492 898
CN-A- 110 010 256          CN-A- 111 403 058
CN-A- 111 403 058          CN-A- 112 133 460
CN-A- 112 509 716          CN-A- 114 694 862
US-A- 5 174 946            US-A1- 2014 321 591

• ZHANG, HONG: "Core Power Distribution Measurement and Data Processing in Daya Bay Nuclear Power Station", NUCLEAR SCIENCE AND ENGINEERING, vol. 17, no. 01, 31 March 1997 (1997-03-31), pages 1 - 11, XP009550065, ISSN: 0258-0918

## Description

### TECHNICAL FIELD

The present application relates to the field of nuclear energy technologies, and particularly to a power distribution measurement method, apparatus, and system for a nuclear power plant.

### BACKGROUND

The reactor core is also referred to as a reactor active area, and consists of fuel assemblies arranged in a reactor core framework with certain grids. The power distribution of the reactor core is an important parameter in the reactor physical analysis, and is the basis of the reactor design, safety analysis, fault diagnosis and reactor control, etc.

In the conventional technology, a pneumatic buoy measurement system is adopted as a mobile neutron detection system and a self-energized neutron detection system is adopted as a fixed detection system to measure the power distribution of the reactor core. However, the conventional technology cannot measure the power distribution in the zero-power physical experiments of the 3rd generation nuclear power units.

The document EP 3965121A1 discloses a method and a device for measuring control rod worth in a nuclear power plant under a sub-critical state. The method includes steps of acquiring a response value of a first neutron detector of a nuclear reactor in an initial state; acquiring a response value of the second neutron detector of the nuclear reactor in the sub-critical state; and determining the control rod worth according to the response of the first neutron detector and the response value of the second neutron detector.

The document CN 111403058A discloses a control rod value measuring method of a nuclear reactor. Control rod value measurement is carried out when the nuclear reactor is in a subcritical state, and the control rodvalue measuring method comprises the following steps: firstly, setting parameters of a nuclear reactor main loop system in an evaporator cooling normal shutdown mode, and inserting all control rods tobe measured into the lowest position of a reactor core; then diluting the nuclear reactor to enable the nuclear reactor to be in a subcritical state; and then sequentially lifting the rods and sequentially recording the values of a source range counter, and solving the values of the control rods according to the values of the source range counter.

The document CN 108492898A discloses a method and a device for measuring the value of a control rod of a million-kilowatt nuclear power station. The method comprises the steps of controlling the control rod to move in a reactor, and when a processor executes a computer program, the following steps are implemented: the front counting rate of a moving rod of the reactor corresponding to a detector is obtained in the first sub-critical state, the front counting rate of the moving rod of the detector is obtained in the second critical state; a refueling mode of the reactor is obtained and a corresponding target coordinate system is obtained according to the refueling mode; the target coordinate system comprises a first value curve and a second value curve; according to the front counting rate of the movingrod and the first value curve, the front multiplication factor of the moving rod corresponding to the neutron number in the reactor is determined; according to the post counting rate of the moving rod and the second value curve, the post proliferation factor of the moving rod corresponding to the neutron number in the reactor is determined; and the value of the control rod is calculated accordingto the front multiplication factor of the moving rod and the post multiplication factor of the moving rod.

The document US 2014/321591A1 discloses a nuclear power distribution measurement assembly that is sized to fit within an instrumentation thimble of a nuclear fuel assembly, that employs a spaced tandem arrangement of thermo-acoustic engines, each of which has a heat source side that is insulated from the reactor coolant traversing the nuclear core in which the fuel assembly is to be placed and a cold side housing a resonator chamber with enhanced thermal conductance to the coolant. The resonator chamber of each of the thermo-acoustic engines is of a different length to generate a different frequency whose amplitude is proportional to the neutron activity at the axial and radial position of the thermo-acoustic engine. The frequency identifies the measurement assembly's position. Acoustic telemetry is employed to monitor the acoustic waves generated by the individual thermo-acoustic engines to provide a remote reading of the axial and radial power distribution of a reactor core.

### SUMMARY

In view of this, as for the above technical problem, it is necessary to provide a power distribution measurement method, apparatus, and system for a nuclear power plant.

In the first aspect of the present invention, a power distribution measurement method for a nuclear power plant is provided, including:

controlling and regulating the control rod from an initial position inside the reactor core to a top portion of the reactor core, and acquiring an initial reactivity value when reactivity of the reactor is stable, the top portion of the reactor core referring to the top of the reactor;

controlling and regulating the control rod from the initial position inside the reactor core to a bottom portion of the reactor core, and acquiring a terminal-value reactivity value when reactivity of the reactor is stable, the bottom portion of the reactor core referring to the bottom of the reactor; and

acquiring a radial power distribution of the reactor core through the initial reactivity value, the terminal-value reactivity value, and a theoretical power of a control rod assembly corresponding to the control rod, the control rod assembly referring to a nuclear fuel assembly with the control rod.

**In** an embodiment, the reactor core includes a plurality of control rod assemblies, and the method further includes:

after acquiring an initial reactivity value and a terminal-value reactivity value of a current control rod, controlling and regulating the current control rod from the bottom portion of the reactor core to the top portion of the reactor core;
for each of other control rods, continuing to acquire the initial reactivity value of the reactor when the control rod is regulated from the inside of the reactor core to the top portion of the reactor core, until initial reactivity values and terminal-value reactivity values of all control rods are acquired, to acquire the radial power distribution of the reactor core through the initial reactivity values and the terminal-value reactivity values of all the control rods and theoretical powers of control rod assemblies corresponding to all the control rods.

In an embodiment, the acquiring the radial power distribution of the reactor core through the initial reactivity value, the terminal-value reactivity value, and the theoretical power of the control rod assembly corresponding to the control rod includes:

determining a single rod measured value of each control rod through the initial reactivity value and the terminal-value reactivity value of each control rod;
determining a value coefficient of each control rod based on the single rod measured value and a single rod theoretical value of each control rod;
determining a product of the theoretical power of the control rod assembly corresponding to each control rod and the value coefficient of each control rod as a measured power of the control rod assembly corresponding to each control rod; and
preprocessing measured powers of control rod assemblies corresponding to all control rods, and obtaining the radial power distribution of the reactor core.

In an embodiment, the determining the value coefficient of each control rod based on the single rod measured value and a single rod theoretical value of each control rod includes:
performing an arithmetic operation on the single rod measured value and the single rod theoretical value of each control rod, and obtaining the value coefficient of each control rod.

In an embodiment, the reactor core includes a control rod assembly and a non-control rod assembly, the preprocessing the measured powers of the control rod assemblies corresponding to all control rods, and obtaining the radial power distribution of the reactor core includes:

fitting a measured power of the non-control rod assembly through the measured powers of all the control rod assemblies;
performing normalization processing on the measured powers of all control rod assemblies and measured powers of all non-control rod assemblies, and obtaining the radial power distribution of the reactor core.

In the second aspect of the present invention, a power distribution measurement apparatus for a nuclear power plant is provided, including:

an initial reactivity acquisition module, configured to acquire an initial reactivity value of a reactor when a control rod is regulated from inside of a reactor core to a top portion of the reactor core;
a terminal-value reactivity acquisition module, configured to acquire a terminal-value reactivity value of the reactor when the control rod is regulated from the inside of the reactor core to a bottom portion of the reactor core; and
a power acquisition module, configured to acquire a radial power distribution of the reactor core through the initial reactivity value, the terminal-value reactivity value, and a theoretical power of a control rod assembly corresponding to the control rod, the control rod assembly referring to a nuclear fuel assembly with the control rod.

The initial reactivity acquisition module further includes a first position control unit and an initial value acquisition unit, the first position control unit is configured to control and regulate the control rod from an initial position inside the reactor core to the top portion of the reactor core, the initial value acquisition unit is configured to acquire the initial reactivity value when the reactivity of the reactor is stable, the top portion of the reactor core refers to the top of the reactor;
The terminal-value reactivity acquisition module further includes a second position control unit and a terminal-value reactivity acquisition unit, the second position control unit is configured to regulate the control rod from the initial position inside the reactor core to the bottom portion of the reactor core, the terminal-value acquisition unit is configured to acquire the terminal-value reactivity value when the reactivity of the reactor is stable, the bottom portion of the reactor core refers to the bottom of the reactor.
In the third aspect of the present invention, a power distribution measurement system for a nuclear power plant is provided, including a data collection device and a digital experimental simulation device,

the data collection device is configured to collect an initial reactivity value and a terminal-value reactivity value of a reactor, and transmit the initial reactivity value and the terminal-value reactivity value to the digital experimental simulation device; and

the digital experimental simulation device is configured to perform the method of any embodiments in the first aspect.

In an embodiment, the system further includes a control rod drive system, and

the control rod drive system is configured to control and regulate the control rod from the inside of the reactor core to the top portion or bottom portion of the reactor core, to allow the data collection device to collect the initial reactivity value and the terminal-value reactivity value of the reactor.

For the above-mentioned power distribution measurement method, apparatus, and system for the nuclear power plant, the method includes: an initial reactivity value of a reactor is acquired when a control rod is regulated from inside of a reactor core to a top portion of the reactor core; a terminal-value reactivity value of the reactor is acquired when the control rod is regulated from the inside of the reactor core to a bottom portion of the reactor core; and a radial power distribution of the reactor core is acquired through the initial reactivity value, the terminal-value reactivity value, and a theoretical power of a control rod assembly corresponding to the control rod. Compared to the conventional technology, the power distribution measurement of the reactor core can be implemented in the zero-power physical experiment platform by using the above method, thereby improving the accuracy of the power distribution measurement in the zero-power physical experiment platform.

## BRIEF DESCRIPTION OF THE DRAWINGS

In order to more clearly illustrate the technical solution in the embodiments of the present invention, the accompanying drawings required for use in the embodiments will be briefly introduced below. Obviously, the drawings described below are merely some embodiments of the present invention. Those skilled in the art may obtain other drawings based on these drawings without any creative effort.

FIG. 1 is an internal structure diagram of a digital experimental simulation device according to an embodiment.
FIG. 2 is a flow chart showing a power distribution measurement method for a nuclear power plant according to an embodiment.
FIG. 3 is a flow chart showing a method for obtaining an initial reactivity value according to an embodiment.

FIG. 4 is a flow chart showing a method for obtaining a terminal-value reactivity value according to another embodiment.
FIG. 5 is a flow chart showing a method for obtaining a radial power distribution of a reactor core according to another embodiment.
FIG. 6 is a flow chart showing a method for determining a reaction deviation value of each control rod according to another embodiment.
FIG. 7 is a structure diagram of a power distribution measurement apparatus for a nuclear power plant according to an embodiment.

## DETAILED DESCRIPTION

In order to make the purpose, the technical solution, and advantages of the present invention clearer to understand, the present invention is elaborated below in conjunction with the accompanying drawings and embodiments. It should be appreciated that the specific embodiments described herein are merely used for explaining the present invention, rather than limiting the present application.

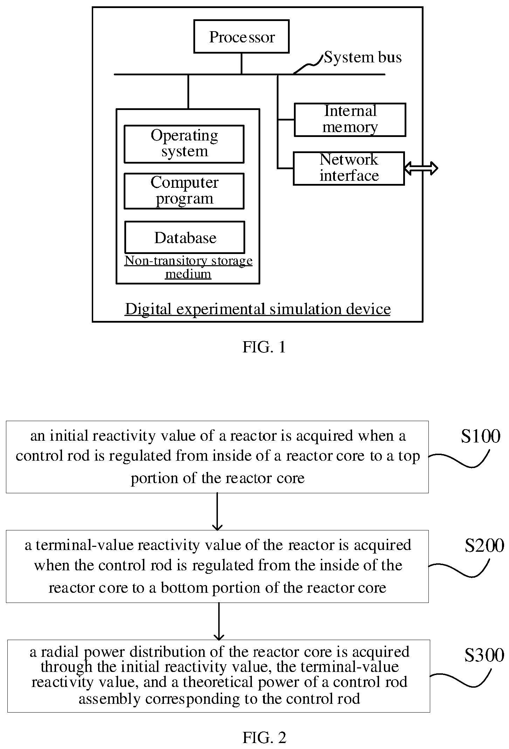

A power distribution measurement method for a nuclear power plant provided in the present application can be applied to the digital experimental simulation device shown in FIG. 1. The digital experimental simulation device may include a processor, a memory, a network interface, a display screen, and an input device that are connected to each other through a system bus. The processor of the digital experimental simulation device is configured to provide computing and control capabilities. The memory of the digital experimental simulation device includes a non-transitory storage medium and an internal memory. The non-transitory storage medium stores an operating system and a computer program. The internal memory provides an environment for operations of the operating system and the computer program in the non-transitory storage medium. A database of the digital experimental simulation device is configured to store reactivity of the reactor at different moments. The network interface of the digital experimental simulation device is configured to communicate with an external terminal through a network connection. The computer program is executed by the processor to implement a power distribution measurement method.

A person skilled in the art may understand that the structure shown in FIG. 1 is merely a block diagram of partial structure related to the solution of the present application, and does not constitute a limitation on the digital experimental simulation device to which the solution of the present application is applied. A specific digital experimental simulation device may include more or fewer components than those shown in the figures, or combine some components, or have different component arrangements.

It should be noted that the power distribution measurement method for a nuclear power plant provided in the embodiment of the present invention is adapted to a measurement of a radial power distribution of a reactor core on a zero-power physical experiment platform. An execution body of the method may be a power distribution measurement apparatus for a nuclear power plant, and the apparatus may be implemented as a part or all of a digital experimental simulation device in a manner of software, hardware, or a combination of software and hardware. The following embodiment provides an implementation procedure in which a digital experimental simulation device performs a power distribution measurement on a reactor core.

In order to implement the power distribution measurement in a zero-power physical experiment platform for a 3rd generation nuclear power unit, the present application provides a power distribution measurement method for a nuclear power plant. As shown in FIG. 2, the method may include the following steps.

S100: an initial reactivity value of a reactor is acquired when a control rod is regulated from inside of a reactor core to a top portion of the reactor core.

Specifically, the digital experimental simulation device may simulate that a nuclear power unit is on a zero-power physical experiment platform, and simulate critical experimental data of the reactor to implement the power distribution measurement of the reactor core. The reactor may be referred to as an atomic energy reactor, and is a device capable of maintaining a controllable self-supporting chain nuclear fission reaction to implement nuclear energy utilization. The top portion of the reactor core may be understood as the top of the reactor.

It should be noted that, by arranging the fuel properly, a process of self-supporting chain nuclear fission may occur in the above-mentioned reactor without adding a neutron source. The reactor is also referred to as a heart of the nuclear power plant. The reactor may include a core, a structure body, a control rod, a shielding body, and the like. The structure body may include fuel cladding, a core framework configured to place the core, and a reactor pressure vessel, etc. The shielding body is configured to attenuate various rays generated by the reactor core, so that neutrons generated by the reactor core can be decelerated and absorbed by the shielding body. The control rod can be configured to compensate and regulate neutron reactivity in the reactor and perform emergency shutdown to regulate a reaction rate. The control rod may be made of a material capable of absorbing the neutrons, and the absorbing material is usually boron, boron carbide, cadmium, silver indium cadmium, or the like.

It should be appreciated that the reactivity of the reactor may reflect a physical quantity of a state of the reactor, and represent a degree of the reactor deviating from a critical state. The initial reactivity may be a reactivity corresponding to the reactor when the control rod is regulated to the top portion of the core. The digital experimental simulation device may obtain the pre-stored initial reactivity value of the reactor through a path such as cloud or local.

S200: a terminal-value reactivity value of the reactor is acquired when the control rod is regulated from the inside of the reactor core to a bottom portion of the reactor core.

In the embodiment, before the position of the control rod in the above steps S100 and S200 is regulated, a reactivity value of the reactor may be the same. When the same control rod is regulated to different positions, the reactivity of the reactor may be the same or may be different. The above reactor may be a commercial Pressurized Water Reactor (PWR). Optionally, the bottom portion of the core may be understood as a bottom of the reactor. The digital experimental simulation device may obtain the pre-stored terminal-value reactivity value of the reactor through a path such as cloud or local.

S300: a radial power distribution of the reactor core is acquired through the initial reactivity value, the terminal-value reactivity value, and a theoretical power of a control rod assembly corresponding to the control rod.

It may be appreciated that the digital experimental simulation device may perform an arithmetic operation, comparison processing, numerical conversion processing, and/or normalization processing, etc., on the initial reactivity value, the terminal-value reactivity value, and the theoretical power of the control rod assembly corresponding to the control rod, to obtain the radial power of the core, and further obtain the radial power distribution of the core according to the radial power of the core. The reactor core may include a plurality of control rod assemblies. Optionally, the control rod assembly may be understood as a nuclear fuel assembly with a control rod. The control rod assembly is opposite to a non-control rod assembly. The non-control rod assembly may be understood as a nuclear fuel assembly without a control rod.

In the above-mentioned power distribution measurement method for the nuclear power plant, the initial reactivity value of the reactor is acquired when the control rod is regulated from the inside of the reactor core to the top portion of the reactor core, the terminal-value reactivity value of the reactor is acquired when the control rod is regulated from the inside of the reactor core to the bottom portion of the reactor core, and the radial power distribution of the reactor core is acquired through the initial reactivity value, the terminal-value reactivity value, and the theoretical power of the control rod assembly corresponding to the control rod. The method is not only adapted to the power distribution measurements of the reactor cores of the 1st generation and 2nd generation nuclear power units, but also adapted to the power distribution measurement of the reactor core of the 3rd generation nuclear power unit, so that the power distribution measurement method has higher reliability and wider applicability. In addition, compared to the conventional technology, the above-mentioned method can implement the power distribution measurement of the reactor core in the zero-power physical experiment platform, thereby improving an accuracy of the power distribution measurement in the zero-power physical experiment platform, so that the measured power distribution is consistent with the theoretical power distribution, and an excessive value of a single rod is avoided during the zero-power physical experiment.

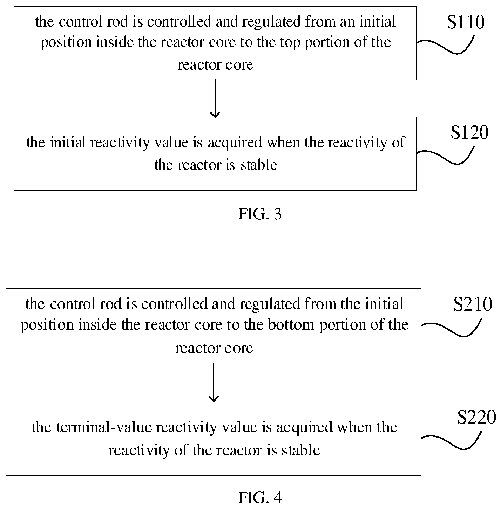

As an embodiment, as shown in FIG. 3, the above step S100 of acquiring the initial reactivity value of the reactor when the control rod is regulated from the inside of the reactor core to the top portion of the reactor core may be implemented through the following steps.

S110: the control rod is controlled and regulated from an initial position inside the reactor core to the top portion of the reactor core.

In the embodiment, the digital experimental simulation device may transmit an initial position regulation instruction to a control rod drive system in which the control rod is inserted, so that the control rod drive system may regulate a bundle of control rods inserted in the reactor core from an initial position in the reactor core to the top portion of the reactor core. Optionally, the initial position regulation instruction may be configured to instruct to regulate the control rod from the initial position in the reactor core to the top portion of the reactor core. The initial position regulation instruction may carry a magnitude and a direction of the regulation.

In the process of regulating the position of a bundle of control rods in the reactor core, the reactivity of the reactor may change. The initial position of the control rod in the reactor core may be understood as a position at which the control rod starts to be inserted into the reactor core.

S120: the initial reactivity value is acquired when the reactivity of the reactor is stable.

Specifically, the stable reactivity of the reactor may be understood as that the operating state of the reactor is an equilibrium state. When the reactivity of the reactor is stable, a data collection device may collect the current reactivity value of the reactor, i.e., the initial reactivity value, and may transmit the initial reactivity value to the digital experimental simulation device.

Further, as shown in FIG. 4, the above step S200 of acquiring the terminal-value reactivity value of the reactor when the control rod is regulated from the inside of the reactor core to the bottom portion of the reactor core may be implemented through the following steps.

S210: the control rod is controlled and regulated from the initial position inside the reactor core to the bottom portion of the reactor core.

Specifically, the digital experimental simulation device may transmit a terminal-value position regulation instruction to the control rod drive system in which the control rod is inserted, so that the control rod drive system may regulate a bundle of control rods inserted in the reactor core from a terminal-value position in the reactor core to the bottom portion of the reactor core. Optionally, the terminal-value position regulation instruction may be configured to instruct to regulate the control rod from the initial position in the reactor core to the bottom portion of the reactor core. The terminal-value position regulation instruction may carry a magnitude and a direction of the regulation.

In the process of regulating the position of a bundle of control rods in the reactor core, the reactivity of the reactor may have different changes or the same change.

S220: the terminal-value reactivity value is acquired when the reactivity of the reactor is stable.

It should be understood that, when the reactivity of the reactor is stable, the data collection device may collect a current reactivity value corresponding to the current control rod, i.e., a terminal-value reactivity value, and may transmit the terminal-value reactivity value to the digital experimental simulation device.

Optionally, parameters in the initial reactivity are in a one-to-one corresponding relationship with parameters in the terminal-value reactivity. For example, there exists a parameter A in the initial reactivity, the control rod is regulated from the initial position in the reactor core to the bottom portion of the reactor core, and there exists a parameter A1 in the terminal-value reactivity when the reactivity of the reactor is stable.

With the above-mentioned power distribution measurement method for the nuclear power plant, the control rod can be controlled and regulated from the inside of the reactor core to different positions, and reactivity corresponding to different positions can be acquired, so that the radial power distribution of the reactor core can be obtained based on the reactivity value and theoretical power of the control rod assembly corresponding to the control rod. The method is not only adapted to the power distribution measurement of the reactor core of the 1st generation and 2nd generation nuclear power units, but also adapted to the power distribution measurement of the reactor core of the 3rd generation nuclear power unit, accordingly the power distribution measurement method has higher reliability and wider applicability. In addition, compared to the conventional technology, the above method can implement the power distribution measurement of the reactor core in the zero-power physical experiment platform, thereby improving the accuracy of the power distribution measurement in the zero-power physical experiment platform.

In an embodiment, the reactor core includes a plurality of control rod assemblies. After the initial reactivity value and the terminal-value reactivity value of the current control rod are acquired, the method may further include: the current control rod is controlled and regulated from the bottom portion of the reactor core to the top portion of the reactor core; the step of acquiring the initial reactivity value of the reactor when the control rod is regulated from the inside of the reactor core to the top portion of the reactor core is continued for other control rods, until the initial reactivity values and the terminal-value reactivity values of all control rods are acquired, to acquire the radial power distribution of the reactor core through the initial reactivity values and the terminal-value reactivity values of all the control rods and the theoretical powers of the control rod assemblies corresponding to all the control rods.

It should be appreciated that there is a plurality of bundles of control rods inserted in the reactor core. For each bundle of control rods, the steps S100 and S200 may be performed until an initial reactivity value and a terminal-value reactivity value corresponding to each bundle of control rods are acquired. Further, the radial power distribution of the entire reactor core is acquired by acquiring the initial reactivity value and the terminal-value reactivity value corresponding to each bundle of control rods and the theoretical power of a control rod assembly corresponding to each bundle of control rods.

It should be noted that the digital experimental simulation device may transmit the initial position regulation instruction to the control rod drive system in which the control rods are inserted, to synchronously regulate all control rods from the initial positions in the reactor core to the top portion of the reactor core, and may further transmit the terminal-value position regulation instruction to the control rod drive system in which the control rods are inserted, to asynchronously regulate all control rods from the initial positions in the reactor core to the top portion of the reactor core. Meanwhile, the digital experimental simulation device may regulate the control rods in the reactor core asynchronously from the initial positions in the reactor core to the bottom portion of the reactor core. That is, one bundle of control rods is first controlled and regulated asynchronously from the initial position in the reactor core to the bottom portion of the reactor core, and then another bundle of control rods is controlled and regulated asynchronously from the initial position in the reactor core to the bottom portion of the reactor core, until all the control rods are controlled and regulated asynchronously from the initial positions in the reactor core to the bottom portion of the reactor core.

However, in the embodiment, when the control rods in the reactor core are controlled and regulated from the initial positions in the reactor core to the bottom portion of the reactor core, the initial reaction state of the reactor keeps unchanged, i.e., different control rods in the reactor core may be controlled and regulated from the initial positions in the reactor core to the bottom portion of the reactor core in the same reaction state. In each simulation experiment, only the position of one bundle of control rods in all control rods in the reactor core is controlled and regulated, and positions of other control rods are kept on the top portion of the reactor core. In the embodiment, one simulation experiment may be performed on each bundle of control rods. In the embodiment, the control rods may be controlled to be inserted into the bottom portion of the reactor core from the initial positions in the reactor core by using a stepping mode, or the control rods may be controlled to be directly dropped into the bottom portion of the reactor core from the initial positions in the reactor core by using a rod-dropping mode.

With the above power distribution measurement method for the nuclear power plant, all control rods can be controlled and regulated from the inside of the reactor core to different positions, the reactivity corresponding to different positions can be acquired, and then the radial power distribution of the reactor core is obtained based on the reactivity values of all the control rods at different positions and the theoretical powers of control rod assemblies corresponding to all the control rods, thereby further improving the accuracy of the power distribution measurement in the zero-power physical experiment platform. In addition, the above method may further be adopted to measure a single rod value for all control rod bundles, and analyze a parameter over-standard problem such as the single rod value exceeds a standard during the zero-power physical experiment of the reactor, to further verify the consistency of the reactor core design, so that the measured power distribution is consistent with the theoretical power distribution.

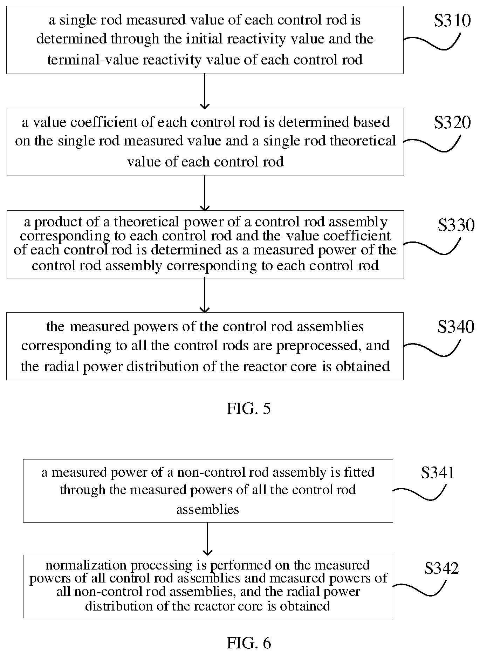

In an embodiment, as shown in FIG. 5, the step S300 of acquiring the radial power distribution of the reactor core through the initial reactivity value, the terminal-value reactivity value, and the theoretical power of the control rod assembly corresponding to the control rod may include the following steps.

S310: a single rod measured value of each control rod is determined through the initial reactivity value and the terminal-value reactivity value of each control rod.

Specifically, the digital experimental simulation device may perform the arithmetic operation, comparison processing, numerical conversion processing, and/or normalization processing on the acquired initial reactivity value and terminal-value reactivity value of each control rod, to obtain the single rod measured value of each control rod in the reactor core. However, in the embodiment, the digital experimental simulation device may perform a subtraction operation on the acquired initial reactivity value and terminal-value reactivity value of each control rod, to obtain the single rod measured value of each control rod. For example, if the initial reactivity value of a bundle of control rods T is $\rho_{T1}$, and the terminal-value reactivity value of the bundle of control rods T is $\rho_{T2}$, the single rod measured value of the bundle of control rods satisfies $\rho_{Tmeasurement} = \rho_{T1} - \rho_{T2}$.

The single rod measured value of the control rod may be configured to measure a degree of deviation between the reactivity of the reactor when the control rod is regulated from the initial position to different positions respectively.

S320: a value coefficient of each control rod is determined based on the single rod measured value and a single rod theoretical value of each control rod.

It should be appreciated that the digital experimental simulation device may perform the arithmetic operation on the single rod measured value and the single rod theoretical value of each control rod to obtain the value coefficient of each control rod. The arithmetic operation may be an addition operation, a subtraction operation, a division operation, a multiplication operation, an exponential operation, a logarithm operation, or a combination operation of these operations.

The above step S320 of determining the value coefficient of each control rod based on the single rod measured value and the single rod theoretical value of each control rod may specifically include: a quotient of the single rod measured value and the single rod theoretical value of each control rod is taken , and a square root of the quotient is taken as the value coefficient of each control rod.

In the embodiment, the digital experimental simulation device may take the quotient of the single rod measured value and the single rod theoretical value of each control rod before taking a square root of a quotient value, and obtain the value coefficient of each control rod. With reference to the previous example, if the single rod theoretical value of the bundle of control rods is $\rho_{Ttheoretical}$, the value coefficient of the bundle of control

rods satisfies $\mathrm{k}_T = \sqrt{\rho_{Tmeasurement} / \rho_{Ttheoretical}}$ .

S330: a product of a theoretical power of a control rod assembly corresponding to each control rod and the value coefficient of each control rod is determined as a measured power of the control rod assembly corresponding to each control rod.

Specifically, the digital experimental simulation device may calculate the product of the theoretical power of the control rod assembly corresponding to each control rod and the value coefficient corresponding to each control rod, and obtain the measured power of the control rod assembly corresponding to each control rod. In the embodiment, the reactor core includes a nuclear fuel assembly, and the nuclear fuel assembly may include a control rod assembly and a non-control rod assembly. The control rod assembly may be understood as a nuclear fuel assembly with a control rod, and the non-control rod assembly may be understood as a nuclear fuel assembly without a control rod.

S340: the measured powers of the control rod assemblies corresponding to all the control rods are preprocessed, and the radial power distribution of the reactor core is obtained.

Specifically, the above preprocessing may be the arithmetic operation, comparison processing, numerical conversion processing, or the like. The digital experimental simulation device may perform the arithmetic operation, comparison processing, and/or numerical conversion processing on the measured powers of the control rod assemblies corresponding to all the control rods, and obtain the radial power distribution of the reactor core. Alternatively, the digital experimental simulation device may perform the arithmetic operation, comparison processing, and/or numerical conversion processing on the measured powers of the control rod assemblies corresponding to all the control rods, and obtain the radial power distribution of the reactor core. Of course, the digital experimental simulation device may further perform the arithmetic operation, comparison processing, and/or numerical conversion processing on the measured powers of the control rod assemblies corresponding to all the control rods and a preset power threshold value, and obtain the radial power distribution of the reactor core.

With the above-mentioned power distribution measurement method for the nuclear power plant, the radial power distribution of the reactor core can be obtained. The method is not only adapted to the power distribution measurements of the reactor cores of the 1st generation and 2nd generation nuclear power units, but also adapted to the power distribution measurement of the reactor core of the 3rd generation nuclear power unit, so that the power distribution measurement method has higher reliability and wider applicability. In addition, compared to the conventional technology, the above-mentioned method can be adopted to implement the power distribution measurement of the reactor core in the zero-power physical experiment platform, thereby improving the accuracy of the power distribution measurement in the zero-power physical experiment platform.

In an embodiment, as shown in FIG. 6, the above step S340 of preprocessing the measured powers of the control rod assemblies corresponding to all the control rods and obtaining the radial power distribution of the reactor core may be implemented through the following steps.

S341: a measured power of a non-control rod assembly is fitted through the measured powers of all the control rod assemblies.

Specifically, the digital experimental simulation device may fit the measured power of the non-control rod assembly using a polynomial fitting mode according to the measured powers of all the control rod assemblies. The polynomial fitting mode may be a polynomial curve fitting method, a least squares fitting method, or the like. However, in the embodiment, the polynomial fitting mode is a spline fitting method.

S342: normalization processing is performed on the measured powers of all control rod assemblies and measured powers of all non-control rod assemblies, and the radial power distribution of the reactor core is obtained.

Specifically, the reactor core may have an approximately cylindrical structure. A radial direction refers to a radium direction of the cylindrical structure, and an axial direction refers to a side direction of the cylindrical structure. The radial power distribution of the reactor core may be understood as a radial power distribution structure diagram, and the structure diagram may show a radial power of a control rod assembly and a radial power of a non-control rod assembly. The radial power distribution structure diagram may include a plurality of square power distribution structure diagrams. Each square power distribution structure diagram represents a radial power of one control rod assembly or a radial power of one non-control rod assembly. A total quantity of square power distribution structure diagrams in the radial power distribution structure diagram may be equal to a total quantity of control rod assemblies and non-control rod assemblies in the reactor core.

Optionally, the radial power of the control rod assemblies may be a result of the normalization processing on the measured powers of the control rod assemblies and the non-control rod assemblies in all the fuel assemblies. Optionally, the above-mentioned normalization processing may be understood as a process in which the measured powers of the control rod assemblies and the non-control rod assemblies in all the fuel assemblies are normalized into a range of 0 to 1. However, in the embodiment, the above-mentioned normalization processing may be understood as a process in which the measured powers of each control rod assembly and each non-control rod assembly in all fuel assemblies are divided by an average value of the measured powers of all control rod assemblies and all non-control rod assemblies in all fuel assemblies. The average value of the measured powers of all control rod assemblies and all non-control rod assemblies in all fuel assemblies is equal to 1, and a sum of all results obtained by the normalization processing may be equal to a total quantity of all control rod assemblies and all non-control rod assemblies in all fuel assemblies.

In the above-mentioned power distribution measurement method for the nuclear power plant, the radial power distribution of the reactor core can be acquired in combination with the single rod theoretical value, thereby improving the accuracy of the power distribution measurement in the zero-power physical experiment platform, so that the measured power distribution is consistent with the theoretical power distribution, and the single rod value is prevented from exceeding a standard during the zero-power physical experiment.

In another embodiment, as shown in a schematic structure diagram of a power distribution measurement system for a nuclear power plant, the power distribution measurement system for the nuclear power plant may include a data collection device and a digital experimental simulation device.

The data collection device is configured to collect an initial reactivity value and a terminal-value reactivity value of a reactor, and transmit the initial reactivity value and the terminal-value reactivity value to the digital experimental simulation device.

The digital experimental simulation device is configured to execute the method steps in any of the aforementioned embodiments shown in FIG. 2 to FIG. 6.

In the embodiment, the data collection device may be a device such as a sensor, a nuclear measurement system, or a detector, etc. In the embodiment, after the digital experimental simulation device in the power distribution measurement system for the nuclear power plant controls and regulates the control rod from the initial position in the reactor core to the top portion of the reactor core, the data collection device may collect the initial reactivity value of the reactor. Meanwhile, the data collection device collects the terminal-value reactivity value of the reactor after the digital experimental simulation device in the power distribution measurement system for the nuclear power plant controls and regulates the control rod from the initial position in the reactor core to the bottom portion of the reactor core.

It should be appreciated that the data collection device may transmit the collected initial reactivity value and terminal-value reactivity value of the reactor to the digital experimental simulation device, and then the digital experimental simulation device may perform the method step in any of the above embodiments shown in FIG. 2 to FIG. 6 according to the acquired initial reactivity value and terminal-value reactivity value of the reactor.

Further, the power distribution measurement system for the nuclear power plant may further include a control rod drive system.

The control rod drive system is configured to control and regulate the control rod from the inside of the reactor core to the top portion or bottom portion of the reactor core, to allow the data collection device to collect the initial reactivity value and the terminal-value reactivity value of the reactor.

Specifically, the control rod drive system may include a controller and a reactor pressure vessel. The reactor pressure vessel may be configured to insert a control rod assembly and a non-control rod assembly. The controller in the control rod drive system may receive an initial position regulation instruction and a terminal-value position regulation instruction transmitted by the digital experimental simulation device. Further, after receiving the initial position regulation instruction and the terminal-value position regulation instruction, the controller separately controls and regulates the control rods in the control rod assembly from the inside of the reactor core to the top portion or the bottom portion of the reactor core, to allow the data collection device to collect the initial reactivity value and the terminal-value reactivity value of the reactor.

It should be noted that the reactor core may be inserted into the reactor pressure vessel in advance, and the reactor core includes at least two bundles of control rods. At an initial moment, the control rods may be inserted into any position inside the reactor core, and this position is not limited, as long as it is inside the reactor core. The controller in the control rod drive system may synchronously or asynchronously control and regulate one or more control rods in the same position or different positions inside the reactor core, so that reactivity of the reactor may change, that is, the reactivity of the reactor may change when the control rods are completely inserted into the reactor core or partially inserted into the reactor core.

In addition, the controller in the control rod drive system may further synchronously or asynchronously regulate one or more control rods in the same position or different positions inside the reactor core to the bottom portion of the reactor core. For the same control rod, the controller in the control rod drive system may control and regulate the same control rod from the same position to the top portion and the bottom portion of the reactor core respectively.

With the above-mentioned power distribution measurement system for the nuclear power plant, the initial reactivity value of the reactor when the control rod is regulated from the inside of the reactor core to the top portion of the reactor core is acquired, the terminal-value reactivity value of the reactor when the control rod is regulated from the inside of the reactor core to the bottom portion of the reactor core is acquired, and the radial power distribution of the reactor core is acquired through the initial reactivity value, the terminal-value reactivity value, and the theoretical power of the control rod assembly corresponding to the control rod. The system is not only adapted to the power distribution measurements of the reactor cores of the 1st generation and the 2nd generation nuclear power units, but also adapted to the power distribution measurement of the reactor core of the 3rd generation nuclear power unit, so that the power distribution measurement method has higher reliability and wider applicability. Meanwhile, compared to the conventional technology, the above-mentioned system can perform the power distribution measurement of the reactor core in the zero-power physical experiment platform, in order to improve the accuracy of the power distribution measurement in the zero-power physical experiment platform, so that the measured power distribution is consistent with the theoretical power distribution, and the single rod value is prevented from exceeding a standard during the zero-power physical experiment.

For ease of understanding by a person skilled in the art, the power distribution measurement method for the nuclear power plant provided in the application is described by using a digital experimental simulation device as an executive body for an example. Specifically, the method may include the following steps.

(1) An initial reactivity value of a reactor when each control rod inside a reactor core is regulated from the inside of the reactor core to the top portion of the reactor core is acquired.

(2) A terminal-value reactivity value of the reactor when each control rod inside a reactor core is regulated from the inside of the reactor core to the bottom portion of the reactor core is acquired.

(3) A single rod measured value of each control rod is determined through the initial reactivity value and the terminal-value reactivity value of each control rod.

(4) A quotient of the single rod measured value and a single rod theoretical value of each control rod is taken before a square root of the quotient is taken, and a value coefficient of each control rod is obtained.

(5) A product of a theoretical power of a control rod assembly corresponding to each control rod and the value coefficient is determined as a measured power of the control rod assembly corresponding to each control rod.

(6) A measured power of a non-control rod assembly is fitted through the measured powers of all control rod assemblies.

(7) Normalization processing is performed on the measured powers of all control rod assemblies and measured powers of all non-control rod assemblies, the radial power distribution of the reactor core is obtained.

For the execution processes of the above steps (1) to (7), reference can be made to descriptions of the above embodiments, which have similar implementation principles and advantages, and the details are not repeated here.

It should be appreciated that, although steps in the flow charts shown in FIG. 2 to FIG. 6 are sequentially performed in an order indicated by arrows, these steps are not definitely sequentially performed in the order indicated by the arrows. Unless expressly stated in the description, these steps are not performed in a strict order, and these steps may be performed in other orders. In addition, at least a part of steps in FIG. 2 to FIG. 6 may include multiple steps or phases. These steps or phases are not definitely performed at the same moment, but may be performed at different moments. These steps or phases are not definitely performed sequentially, but may be performed in turns or alternately with other steps or at least a part of steps or phases in other steps.

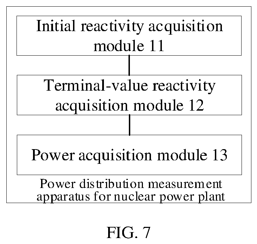

In an embodiment, as shown in FIG. 7, a power distribution measurement apparatus for a nuclear power plant is provided, which may include an initial reactivity acquisition module 11, a terminal-value reactivity acquisition module 12, and a power acquisition module 13.

The initial reactivity acquisition module 11 is configured to acquire an initial reactivity value of a reactor when a control rod is regulated from inside of the reactor core to a top portion of the reactor core.

The terminal-value reactivity acquisition module 12 is configured to acquire a terminal-value reactivity value of the reactor when the control rod is regulated from the inside of the reactor core to a bottom portion of the reactor core.

The power acquisition module 13 is configured to acquire a radial power distribution of the reactor core through the initial reactivity value, the terminal-value reactivity value, and a theoretical power of a control rod assembly corresponding to the control rod.

The power distribution measurement apparatus for the nuclear power plant provided in the embodiment may perform the above method embodiments, and have the similar implementation principles and advantages, the details are not repeated herein.

In an embodiment, the initial reactivity acquisition module 11 includes a first position control unit and an initial value acquisition unit.

The first position control unit is configured to control and regulate a control rod from an initial position inside the reactor core to the top portion of the reactor core.

The initial value acquisition unit is configured to acquire the initial reactivity value when the reactivity of the reactor is stable.

The power distribution measurement apparatus for the nuclear power plant provided in the embodiment may perform the above-mentioned method embodiments, and have similar implementation principles and advantages, the details are not repeated herein.

In an embodiment, the terminal-value reactivity acquisition module 12 may include a second position control unit and a terminal-value reactivity acquisition unit.

The second position control unit is configured to regulate the control rod from the initial position inside the reactor core to the bottom portion of the reactor core.

The terminal-value acquisition unit is configured to acquire the terminal-value reactivity value when the reactivity of the reactor is stable.

The power distribution measurement apparatus for the nuclear power plant provided in the embodiment may perform the above-mentioned method embodiments, and have similar implementation principles and advantages, the details are not repeated herein.

In an embodiment, the reactor core includes a plurality of control rod assemblies. The power distribution measurement apparatus for the nuclear power plant may further include an end position control unit and a position control cycle unit.

The end position control unit is configured to control and regulate a current control rod from the bottom portion of the reactor core to the top portion of the reactor core.

The position control cycle unit is configured to continue to acquire the initial reactivity value of the reactor when the control rod is regulated from the inside of the reactor core to the top portion of the reactor core for other control rods, until the initial reactivity values and the terminal-value reactivity values of all control rods are acquired, to acquire the radial power distribution of the reactor core through the initial reactivity values and the terminal-value reactivity values of all the control rods and theoretical powers of control rod assemblies corresponding to all the control rods.

The power distribution measurement apparatus for the nuclear power plant provided in the embodiment may perform the above method embodiments, and have similar implementation principles and advantages, the details are not repeated herein.

In an embodiment, the power acquisition module 13 may include a measured value acquisition unit, a value coefficient acquisition unit, a measured power acquisition unit, and a radial power distribution acquisition unit.

The measured value acquisition unit is configured to determine a single rod measured value of each control rod through the initial reactivity value and the terminal-value reactivity value of each control rod.

The value coefficient acquisition unit is configured to determine a value coefficient of each control rod based on the single rod measured value and a single rod theoretical value of each control rod.

The measured power acquisition unit is configured to determine a product of a theoretical power of a control rod assembly corresponding to each control rod and the value coefficient of each control rod as a measured power of the control rod assembly corresponding to each control rod.

The radial power distribution acquisition unit is configured to preprocess the measured powers of the control rod assemblies corresponding to all the control rods, and obtain the radial power distribution of the reactor core.

The power distribution measurement apparatus for the nuclear power plant provided in the embodiment may perform the above method embodiments, and have similar implementation principles and advantages, the details are not repeated herein.

In an embodiment, the value coefficient acquisition unit is specifically configured to take a quotient of the single rod measured value and the single rod theoretical value of each control rod before taking a square root of the quotient, and obtain the value coefficient of each control rod.

The power distribution measurement apparatus for the nuclear power plant provided in the embodiment may perform the above method embodiments, and have similar implementation principles and advantages, the details are not repeated herein.

In an embodiment, the reactor core may include a control rod assembly and a non-control rod assembly. The radial power distribution acquisition unit may include a measured power acquisition subunit and a normalization processing subunit.

The measured power acquisition subunit is configured to fit a measured power of a non-control rod assembly through the measured powers of all the control rod assemblies.

The normalization processing subunit is configured to perform normalization processing on the measured powers of all control rod assemblies and measured powers of all non-control rod assemblies, and obtain the radial power distribution of the reactor core.

The power distribution measurement apparatus for the nuclear power plant provided in the embodiment may perform the above method embodiments, and have similar implementation principles and advantages, the details are not repeated herein.

For specific limitations on the power distribution measurement apparatus for the nuclear power plant, reference can be made to the above limitations on the power distribution measurement method for the nuclear power plant, the details are not repeated herein. All or a part of the modules in the above power distribution measurement apparatus may be implemented by using software, hardware, and a combination thereof. The modules may be embedded in or independent of a processor in a digital experimental simulation device in a hardware form, or may be stored in a memory in the digital experimental simulation device in a software form, so that the processor can invoke and perform operations corresponding to the modules.

In an embodiment, a digital experimental simulation device is provided, which includes a processor and a memory storing a computer program. The processor, when executing the computer program, implements the following steps of:

acquiring an initial reactivity value of a reactor when a control rod is regulated from inside of the reactor core to a top portion of the reactor core;
acquiring a terminal-value reactivity value of the reactor when the control rod is regulated from the inside of the core to a bottom portion of the core; and
acquiring a radial power distribution of a reactor core through the initial reactivity value, the terminal-value reactivity value, and a theoretical power of a control rod assembly corresponding to the control rod.

In an embodiment, a readable storage medium is provided, on which a computer program is stored. The computer program, when executed by a processor, may cause the processor to implement the following steps of:

acquiring an initial reactivity value of a reactor when a control rod is regulated from inside of the reactor core to a top portion of the reactor core;
acquiring a terminal-value reactivity value of the reactor when the control rod is regulated from the inside of the core to a bottom portion of the core; and
acquiring a radial power distribution of a reactor core through the initial reactivity value, the terminal-value reactivity value, and a theoretical power of a control rod assembly corresponding to the control rod.

In an embodiment, a computer program product is provided, which includes a computer program. The computer program, when executed by a processor, may cause the processor to implement the following steps of:

acquiring an initial reactivity value of a reactor when a control rod is regulated from inside of the reactor core to a top portion of the reactor core;
acquiring a terminal-value reactivity value of the reactor when the control rod is regulated from the inside of the core to a bottom portion of the core; and
acquiring a radial power distribution of a reactor core through the initial reactivity value, the terminal-value reactivity value, and a theoretical power of a control rod assembly corresponding to the control rod.

A person of ordinary skill in the art should understand that all or part of the processes in the above-mentioned method embodiments can be implemented by instructing related hardware through a computer program. The computer program can be stored in a non-transitory computer-readable storage medium. When the computer program is executed, the processes of the above-mentioned method embodiments are included. Any reference to a memory, a database, or other medium used in the embodiments provided in the present application may include at least one of a non-transitory memory and a transitory memory. The non-transitory memory may include a read-only memory (ROM), a magnetic tape, a floppy disk, a flash memory, an optical storage, a high-density embedded non-volatile memory, a resistive random access memory (ReRAM), a magnetoresistive random access memory (MRAM), a ferroelectric random access memory (FRAM), a phase change memory (PCM), a graphene memory, etc. The transitory memory may include a random access memory (RAM) or an external cache memory, etc. By way of illustration and not limitation, the RAM may be in various forms, such as a static random access memory (SRAM) or a dynamic random access memory (DRAM). The database involved in each embodiment provided in the present invention may include at least one of a relational database and a non-relational database. The non-relational database may include, but is not limited to, a distributed database based on blockchain. The processor involved in each embodiment provided in the present invention may be a general-purpose processor, a central processing unit, a graphics processor, a digital signal processor, a programmable logic unit, a data processing logic unit based on quantum computing, etc., which is not limited thereto.

The technical features in the above embodiments can be arbitrarily combined. In order to make the description concise, all possible combinations of the technical features in the above embodiments are not described. However, as long as there is no contradiction in the combinations of these technical features, these combinations should be regarded as falling within the scope of the present invention. The scope of protection is defined by the appended claims.

## Claims

1. A power distribution measurement method for a nuclear power plant, **characterized by** comprising:

controlling and regulating (S110) the control rod from an initial position inside the reactor core to a top portion of the reactor core, and acquiring (S120) an initial reactivity value when reactivity of the reactor is stable, wherein the top portion of the reactor core refers to the top of the reactor; controlling and regulating the control rod from the initial position inside the reactor core to a bottom portion of the reactor core, and acquiring a terminal-value reactivity value when reactivity of the reactor is stable, wherein the bottom portion of the reactor core refers to the bottom of the reactor; and

acquiring (S300) a radial power distribution of the reactor core through the initial reactivity value, the terminal-value reactivity value, and a theoretical power of a control rod assembly corresponding to the control rod, wherein the control rod assembly refers to a nuclear fuel assembly with the control rod.

2. The method according to claim 1, wherein the controlling and regulating the control rod from the initial position inside the reactor core to the top portion of the reactor core comprises:
synchronously controlling and regulating all control rods inside the reactor core from initial positions inside the reactor core to the top portion of the reactor core.

3. The method according to claim 1, wherein the controlling and regulating the control rod from the initial position inside the reactor core to the top portion of the reactor core comprises:
asynchronously controlling and regulating all control rods inside the reactor core from initial positions inside the reactor core to the top portion of the reactor core.

4. The method according to claim 1, wherein the controlling and regulating the control rod from the initial position inside the reactor core to the bottom portion of the reactor core comprises:
asynchronously controlling and regulating all control rods in the reactor core from initial positions in the reactor core to the bottom portion of the reactor core.

5. The method according to claim 1, wherein the reactor core comprises a plurality of control rod assemblies, and the method further comprises:

after acquiring an initial reactivity value and a terminal-value reactivity value of a current control rod,
controlling and regulating the current control rod from the bottom portion of the reactor core to the top portion of the reactor core;
for each of other control rods, continuing to acquire the initial reactivity value of the reactor when the control rod is regulated from the inside of the reactor core to the top portion of the reactor core, until initial reactivity values and terminal-value reactivity values of all control rods are acquired, to acquire the radial power distribution of the reactor core through the initial reactivity values and the terminal-value reactivity values of all the control rods and theoretical powers of control rod assemblies corresponding to all the control rods.

6. The method according to claim 1, wherein the acquiring the radial power distribution of the reactor core through the initial reactivity value, the terminal-value reactivity value, and the theoretical power of the control rod assembly corresponding to the control rod comprises:

determining (S310) a single rod measured value of each control rod through the initial reactivity value and the terminal-value reactivity value of each control rod;
determining (S320) a value coefficient of each control rod based on the single rod measured value and a single rod theoretical value of each control rod;
determining (S330) a product of the theoretical power of the control rod assembly corresponding to each control rod and the value coefficient of each control rod as a measured power of the control rod assembly corresponding to each control rod; and
preprocessing (S340) measured powers of control rod assemblies corresponding to all control rods, and obtaining the radial power distribution of the reactor core.

7. The method according to claim 6, wherein the determining the value coefficient of each control rod based on the single rod measured value and a single rod theoretical value of each control rod comprises:
performing an arithmetic operation on the single rod measured value and the single rod theoretical value of each control rod, and obtaining the value coefficient of each control rod.

8. The method according to claim 7, wherein the performing the arithmetic operation on the single rod measured value and the single rod theoretical value of each control rod, and obtaining the value coefficient of each control rod comprises:
taking a quotient of the single rod measured value and the single rod theoretical value of each control rod before taking a square root of the quotient, and obtaining the value coefficient of each control rod.

9. The method according to any one of claims 6 to 8, wherein the reactor core comprises a control rod assembly and a non-control rod assembly,
the preprocessing the measured powers of the control rod assemblies corresponding to all control rods, and obtaining the radial power distribution of the reactor core comprises:

> fitting (S341) a measured power of the non-control rod assembly through the measured powers of all the control rod assemblies; and performing (S342) normalization processing on the measured powers of all control rod assemblies and measured powers of all non-control rod assemblies, and obtaining the radial power distribution of the reactor core.

10. A power distribution measurement apparatus for a nuclear power plant, **characterized by** comprising:

> an initial reactivity acquisition module (11), configured to acquire an initial reactivity value of a reactor when a control rod is regulated from inside of a reactor core to a top portion of the reactor core;
> a terminal-value reactivity acquisition module (12), configured to acquire a terminal-value reactivity value of the reactor when the control rod is regulated from the inside of the reactor core to a bottom portion of the reactor core; and
> a power acquisition module (13), configured to acquire a radial power distribution of the reactor core through the initial reactivity value, the terminal-value reactivity value, and a theoretical power of a control rod assembly corresponding to the control rod, wherein the control rod assembly refers to a nuclear fuel assembly with the control rod;
> wherein the initial reactivity acquisition module (11) further comprises a first position control unit and an initial value acquisition unit, the first position control unit is configured to control and regulate the control rod from an initial position inside the reactor core to the top portion of the reactor core, the initial value acquisition unit is configured to acquire the initial reactivity value when the reactivity of the reactor is stable, the top portion of the reactor core refers to the top of the reactor;
> wherein the terminal-value reactivity acquisition module (12) further comprises a second position control unit and a terminal-value reactivity acquisition unit, the second position control unit is configured to regulate the control rod from the initial position inside the reactor core to the bottom portion of the reactor core, the terminal-value acquisition unit is configured to acquire the terminal-value reactivity value when the reactivity of the reactor is stable, the bottom portion of the reactor core refers to the bottom of the reactor.

11. A power distribution measurement system for a nuclear power plant, comprising a data collection device and a digital experimental simulation device, wherein

> the data collection device is configured to collect an initial reactivity value and a terminal-value reactivity value of a reactor, and transmit the initial reactivity value and the terminal-value reactivity value to the digital experimental simulation device; and
> the digital experimental simulation device is configured to perform the method of any one of claims 1 to 9.

12. The system according to claim 11, wherein the system further comprises a control rod drive system, and the control rod drive system is configured to control and regulate the control rod from the inside of the reactor core to the top portion or bottom portion of the reactor core, to allow the data collection device to collect the initial reactivity value and the terminal-value reactivity value of the reactor.

**Patentansprüche**

1. Leistungsverteilungs-Messverfahren für ein Kernkraftwerk, **dadurch gekennzeichnet, dass** es umfasst:

> Steuern und Regeln (S110) des Steuerstabs von einer Ausgangsposition innerhalb des Reaktorkerns zu einem oberen Abschnitt des Reaktorkerns und Erfassen (S120) eines Ausgangsreaktivitätswerts, wenn die Reaktivität des Reaktors stabil ist, wobei sich der obere Abschnitt des Reaktorkerns auf die Oberseite des Reaktors bezieht;
> Steuern und Regeln des Steuerstabs von der Ausgangsposition innerhalb des Reaktorkerns zu einem unteren Abschnitt des Reaktorkerns und Erfassen eines Endwert-Reaktivitätswerts, wenn die Reaktivität des Reaktors stabil ist, wobei sich der untere Abschnitt des Reaktorkerns auf den Boden des Reaktors bezieht; und
> Erfassen (S300) einer radialen Leistungsverteilung des Reaktorkerns durch den Ausgangsreaktivitätswert, den Endwert-Reaktivitätswert und einer theoretischen Leistung einer dem Steuerstab entsprechende Steuerstabbaugruppe, wobei sich die Steuerstabbaugruppe auf eine Kernbrennstoffbaugruppe mit dem Steuerstab bezieht.

2. Verfahren gemäß Anspruch 1, wobei das Steuern und Regeln des Steuerstabs von der Ausgangsposition innerhalb des Reaktorkerns zum oberen Abschnitt des Reaktorkerns Folgendes umfasst:
synchrones Steuern und Regeln aller Steuerstäbe innerhalb des Reaktorkerns von den Ausgangspositionen innerhalb des Reaktorkerns zum oberen Abschnitt des Reaktorkerns.

3. Verfahren gemäß Anspruch 1, wobei das Steuern und Regeln des Steuerstabs von der Ausgangsposition innerhalb des Reaktorkerns zum oberen Abschnitt des Reaktorkerns Folgendes umfasst:
asynchrones Steuern und Regeln aller Steuerstäbe innerhalb des Reaktorkerns von den Ausgangspositionen innerhalb des Reaktorkerns zum oberen Abschnitt des Reaktorkerns.

4. Verfahren gemäß Anspruch 1, wobei das Steuern und Regeln des Steuerstabs von der Ausgangsposition innerhalb des Reaktorkerns zum unteren Abschnitt des Reaktorkerns Folgendes umfasst:
asynchrones Steuern und Regeln aller Steuerstäbe im Reaktorkern von den Ausgangspositionen im Reaktorkern zum unteren Abschnitt des Reaktorkerns.

5. Verfahren gemäß Anspruch 1, wobei der Reaktorkern eine Vielzahl von Steuerstabbaugruppen umfasst und das Verfahren ferner Folgendes umfasst:

   nach dem Erfassen eines Ausgangsreaktivitätswerts und eines Endwert-Reaktivitätswerts eines Stromsteuerstabs,
   Steuern und Regeln des Stromsteuerstabs vom unteren Abschnitt des Reaktorkerns zum oberen Abschnitt des Reaktorkerns;
   für jeden der anderen Steuerstäbe, Fortsetzen des Erfassens des Ausgangsreaktivitätswerts des Reaktors, wenn der Steuerstab vom Inneren des Reaktorkerns zum oberen Abschnitt des Reaktorkerns geregelt wird, bis Ausgangsreaktivitätswerte und Endwert-Reaktivitätswerte aller Steuerstäbe erfasst sind, um die radiale Leistungsverteilung des Reaktorkerns durch die Ausgangsreaktivitätswerte und die Endwert-Reaktivitätswerte aller Steuerstäbe und theoretischen Leistungen von Steuerstabbaugruppen, die allen Steuerstäben entsprechen, zu erfassen.

6. Verfahren gemäß Anspruch 1, wobei das Erfassen der radialen Leistungsverteilung des Reaktorkerns durch den Ausgangsreaktivitätswert, den Endwert-Reaktivitätswert und die theoretische Leistung der Steuerstabbaugruppe, die dem Steuerstab entspricht, Folgendes umfasst:

   Bestimmen (S310) eines Einzelstab-Messwerts jedes Steuerstabs durch den Ausgangsreaktivitätswert und den Endwert-Reaktivitätswert jedes Steuerstabs;
Bestimmen (S320) eines Wertkoeffizienten jedes Steuerstabs auf Grundlage des Einzelstab-Messwerts und eines theoretischen Einzelstabwerts jedes Steuerstabs;
Bestimmen (S330) eines Produkts der theoretischen Leistung der Steuerstabbaugruppe, die jedem Steuerstab entspricht, und des Wertkoeffizienten jedes Steuerstabs als gemessene Leistung der Steuerstabbaugruppe, die jedem Steuerstab entspricht; und
Vorverarbeiten (S340) der gemessenen Leistungen von Steuerstabbaugruppen, die allen Steuerstäben entsprechen, und Ermitteln der radialen Leistungsverteilung des Reaktorkerns.

7. Verfahren gemäß Anspruch 6, wobei das Bestimmen des Wertkoeffizienten jedes Steuerstabs auf der Grundlage des Einzelstab-Messwerts und eines theoretischen Einzelstabwerts jedes Steuerstabs umfasst:
Durchführen einer arithmetischen Operation an dem Einzelstab-Messwert und dem theoretischen Einzelstabwert jedes Steuerstabs und Ermitteln des Wertkoeffizienten jedes Steuerstabs.

8. Verfahren gemäß Anspruch 7, wobei das Durchführen der arithmetischen Operation an dem Einzelstab-Messwert und dem theoretischen Einzelstabwert jedes Steuerstabs und das Ermitteln des Wertkoeffizienten jedes Steuerstabs Folgendes umfasst:
Aufnehmen eines Quotienten aus dem gemessenen Einzelstabwert und dem theoretischen Einzelstabwert jedes Steuerstabs vor dem Ziehen einer Quadratwurzel des Quotienten, und Ermitteln des Wertkoeffizienten jedes Steuerstabs.

9. Verfahren gemäß einem der Ansprüche 6 bis 8, wobei der Reaktorkern eine Steuerstabbaugruppe und eine Nicht-Steuerstabbaugruppe umfasst,
wobei das Vorverarbeiten der gemessenen Leistungen der Steuerstabbaugruppen, die allen Steuerstäben entsprechen, und Ermitteln der radialen Leistungsverteilung des Reaktorkerns Folgendes umfasst:

   Anpassen (S341) einer gemessenen Leistung der Nicht-Steuerstabbaugruppe durch die gemessenen Leistungen aller Steuerstabbaugruppen; und
   Durchführen (S342) einer Normalisierungsverarbeitung an den gemessenen Leistungen aller Steuerstabbaugruppen und gemessenen Leistungen aller Nicht-Steuerstabbaugruppen und Ermitteln der radialen Leistungsverteilung des Reaktorkerns.

**10.** Leistungsverteilungs-Messvorrichtung für ein Kernkraftwerk, **dadurch gekennzeichnet, dass** sie Folgendes umfasst:

ein Ausgangsreaktivitätserfassungsmodul (11), das so konfiguriert ist, dass es einen Ausgangsreaktivitätswert eines Reaktors erfasst, wenn ein Steuerstab von innerhalb eines Reaktorkerns zu einem oberen Abschnitt des Reaktorkerns geregelt wird;
ein Endwert-Reaktivitätserfassungsmodul (12), das so konfiguriert ist, dass es einen Endwert-Reaktivitätswert des Reaktors erfasst, wenn der Steuerstab von der Innenseite des Reaktorkerns zu einem unteren Abschnitt des Reaktorkerns geregelt wird; und
ein Leistungserfassungsmodul (13), das so konfiguriert ist, dass es eine radiale Leistungsverteilung des Reaktorkerns durch den Ausgangsreaktivitätswert, den Endwert-Reaktivitätswert und eine theoretische Leistung einer dem Steuerstab entsprechenden Steuerstabbaugruppe erfasst, wobei sich die Steuerstabbaugruppe auf eine Kernbrennstoffbaugruppe mit dem Steuerstab bezieht;
wobei das Ausgangsreaktivitätserfassungsmodul (11) ferner eine erste Positionssteuereinheit und eine Ausgangswerterfassungseinheit umfasst, wobei die erste Positionssteuereinheit so konfiguriert ist, dass sie den Steuerstab von einer Ausgangsposition innerhalb des Reaktorkerns zu dem oberen Abschnitt des Reaktorkerns steuert und regelt, wobei die Ausgangswerterfassungseinheit so konfiguriert ist, dass sie den Ausgangsreaktivitätswert erfasst, wenn die Reaktivität des Reaktors stabil ist, wobei sich der obere Abschnitt des Reaktorkerns auf die Oberseite des Reaktors bezieht;
wobei das Endwert-Reaktivitätserfassungsmodul (12) ferner eine zweite Positionssteuereinheit und eine Endwert-Reaktivitätserfassungseinheit umfasst, die zweite Positionssteuereinheit so konfiguriert ist, dass sie den Steuerstab von der Ausgangsposition innerhalb des Reaktorkerns zu dem unteren Abschnitt des Reaktorkerns regelt, die Endwert-Erfassungseinheit so konfiguriert ist, dass sie den Endwert-Reaktivitätswert erfasst, wenn die Reaktivität des Reaktors stabil ist, wobei sich der untere Abschnitt des Reaktorkerns auf den Boden des Reaktors bezieht.

**11.** Leistungsverteilungs-Messsystem für ein Kernkraftwerk, umfassend eine Datenaufzeichnungseinrichtung und eine digitale experimentelle Simulationseinrichtung, wobei

die Datenaufzeichnungseinrichtung so konfiguriert ist, dass sie einen Ausgangsreaktivitätswert und einen Endwert-Reaktivitätswert eines Reaktors aufzeichnet und den Ausgangsreaktivitätswert und den Endwert-Reaktivitätswert an die digitale experimentelle Simulationseinrichtung überträgt; und
die digitale experimentelle Simulationseinrichtung so konfiguriert ist, dass sie das Verfahren nach einem der Ansprüche 1 bis 9 durchführt.

**12.** System gemäß Anspruch 11, wobei das System ferner ein Steuerstabantriebssystem umfasst, und das Steuerstabantriebssystem so konfiguriert ist, dass es den Steuerstab vom Inneren des Reaktorkerns zum oberen Abschnitt oder unteren Abschnitt des Reaktorkerns steuert und regelt, um es der Datenaufzeichnungseinrichtung zu ermöglichen, den Ausgangsreaktivitätswert und den Endwert-Reaktivitätswert des Reaktors zu aufzuzeichnen.

**Revendications**

**1.** Procédé de mesure de distribution de puissance pour une centrale nucléaire, **caractérisé en ce qu'**il comprend :

la commande et la régulation (S110) de la tige de commande à partir d'une position initiale à l'intérieur du cœur de réacteur jusqu'à une partie supérieure du cœur de réacteur, et l'acquisition (S120) d'une valeur de réactivité initiale lorsque la réactivité du réacteur est stable, dans lequel la partie supérieure du cœur de réacteur désigne le sommet du réacteur ;
la commande et la régulation de la tige de commande à partir de la position initiale à l'intérieur du cœur de réacteur jusqu'à une partie inférieure du cœur de réacteur, et l'acquisition d'une valeur finale de valeur de réactivité lorsque la réactivité du réacteur est stable, dans lequel la partie inférieure du cœur de réacteur désigne le fond du réacteur ; et
l'acquisition (S300) d'une distribution de puissance radiale du cœur de réacteur à travers la valeur de réactivité initiale, la valeur finale de valeur de réactivité et une puissance théorique d'un ensemble de tige de commande correspondant à la tige de commande, dans lequel l'ensemble de tige de commande désigne un ensemble de combustible nucléaire avec la tige de commande.

**2.** Procédé selon la revendication 1, dans lequel la commande et la régulation de la tige de commande à partir de la position initiale à l'intérieur du cœur de réacteur jusqu'à la partie supérieure du cœur de réacteur comprennent :

la commande et la régulation synchrones de toutes les tiges de commande à l'intérieur du cœur de réacteur à partir de positions initiales à l'intérieur du cœur de réacteur jusqu'à la partie supérieure du cœur de réacteur.

3. Procédé selon la revendication 1, dans lequel la commande et la régulation de la tige de commande à partir de la position initiale à l'intérieur du cœur de réacteur jusqu'à la partie supérieure du cœur de réacteur comprennent :
la commande et la régulation asynchrones de toutes les tiges de commande à l'intérieur du cœur de réacteur à partir de positions initiales à l'intérieur du cœur de réacteur jusqu'à la partie supérieure du cœur de réacteur.

4. Procédé selon la revendication 1, dans lequel la commande et la régulation de la tige de commande à partir de la position initiale à l'intérieur du cœur de réacteur jusqu'à la partie inférieure du cœur de réacteur comprennent :
la commande et la régulation asynchrones de toutes les tiges de commande dans le cœur de réacteur à partir de positions initiales dans le cœur de réacteur jusqu'à la partie inférieure du cœur de réacteur.

5. Procédé selon la revendication 1, dans lequel le cœur de réacteur comprend une pluralité d'ensembles de tiges de commande, et le procédé comprend en outre :

après l'acquisition d'une valeur de réactivité initiale et d'une valeur finale de valeur de réactivité d'une tige de commande de actuelle,
la commande et la régulation de la tige de commande actuelle à partir de la partie inférieure du cœur de réacteur jusqu'à la partie supérieure du cœur de réacteur ;
pour chacune des autres tiges de commande, le fait de continuer d'acquérir la valeur de réactivité initiale du réacteur lorsque la tige de commande est régulée à partir de l'intérieur du cœur de réacteur jusqu'à la partie supérieure du cœur de réacteur, jusqu'à ce que les valeurs de réactivité initiales et les valeurs finales de valeur de réactivité de toutes les tiges de commande soient acquises, pour acquérir la distribution de puissance radiale du cœur de réacteur à travers les valeurs de réactivité initiales et les valeurs finales de valeur de réactivité de toutes les tiges de commande et les puissances théoriques des ensembles de tiges de commande correspondant à toutes les tiges de commande.

6. Procédé selon la revendication 1, dans lequel l'acquisition de la distribution de puissance radiale du cœur de réacteur à travers la valeur de réactivité initiale, la valeur finale de valeur de réactivité et la puissance théorique de l'ensemble de tige de commande correspondant à la tige de commande comprend :

la détermination (S310) d'une valeur mesurée de tige unique de chaque tige de commande à travers la valeur de réactivité initiale et la valeur finale de valeur de réactivité de chaque tige de commande ;
la détermination (S320) d'un coefficient de valeur de chaque tige de commande sur la base de la valeur mesurée de tige unique et d'une valeur théorique de tige unique de chaque tige de commande ;
la détermination (S330) d'un produit de la puissance théorique de l'ensemble de tige de commande correspondant à chaque tige de commande et du coefficient de valeur de chaque tige de commande en tant que puissance mesurée de l'ensemble de tige de commande correspondant à chaque tige de commande ; et
le pré-traitement (S340) de puissances mesurées des ensembles de tiges de commande correspondant à toutes les tiges de commande, et l'obtention de la distribution de puissance radiale du cœur de réacteur.

7. Procédé selon la revendication 6, dans lequel la détermination du coefficient de valeur de chaque tige de commande sur la base de la valeur mesurée de tige unique et d'une valeur théorique de tige unique de chaque tige de commande comprend :
la réalisation d'une opération arithmétique sur la valeur mesurée de tige unique et la valeur théorique de tige unique de chaque tige de commande, et l'obtention du coefficient de valeur de chaque tige de commande.

8. Procédé selon la revendication 7, dans lequel la réalisation de l'opération arithmétique sur la valeur mesurée de tige unique et la valeur théorique de tige unique de chaque tige de commande, et l'obtention du coefficient de valeur de chaque tige de commande comprend :
la prise d'un quotient de la valeur mesurée de tige unique et de la valeur théorique de tige unique de chaque tige de commande avant la prise d'une racine carrée du quotient, et l'obtention du coefficient de valeur de chaque tige de commande.

9. Procédé selon l'une quelconque des revendications 6 à 8, dans lequel le cœur de réacteur comprend un ensemble de tiges de commande et un ensemble de tiges non de commande,
le prétraitement des puissances mesurées des ensembles de tiges de commande correspondant à toutes les tiges de commande, et l'obtention de la distribution de puissance radiale du cœur de réacteur comprend :

l'ajustement (S341) d'une puissance mesurée de l'ensemble de tige de non commande à travers les puissances mesurées de tous les ensembles de tige de commande ; et
la réalisation (S342) d'un traitement de normalisation sur les puissances mesurées de tous les ensembles de tiges de commande et des puissances mesurées de tous les ensembles de tiges de non commande, et l'obtention de la distribution de puissance radiale du cœur de réacteur.

10. Appareil de mesure de distribution de puissance pour une centrale nucléaire, **caractérisé en ce qu'**il comprend :

un module d'acquisition de réactivité initiale (11), conçu pour acquérir une valeur de réactivité initiale d'un réacteur lorsqu'une tige de commande est régulée à partir de l'intérieur d'un cœur de réacteur jusqu'à une partie supérieure du cœur de réacteur ;
un module d'acquisition de valeur finale de réactivité (12), configuré pour acquérir une valeur finale de valeur de réactivité du réacteur lorsque la tige de commande est régulée à partir de l'intérieur du cœur de réacteur jusqu'à une partie inférieure du cœur de réacteur ; et
un module d'acquisition de puissance (13), configuré pour acquérir une distribution de puissance radiale du cœur de réacteur à travers la valeur de réactivité initiale, la valeur finale de valeur de réactivité et une puissance théorique d'un ensemble de tige de commande correspondant à la tige de commande, dans lequel l'ensemble de tige de commande désigne un ensemble de combustible nucléaire avec la tige de commande ;
dans lequel le module d'acquisition de réactivité initiale (11) comprend en outre une première unité de commande de position et une unité d'acquisition de valeur initiale, la première unité de commande de position est configurée pour commander et réguler la tige de commande à partir d'une position initiale à l'intérieur du cœur de réacteur jusqu'à la partie supérieure du cœur de réacteur, l'unité d'acquisition de valeur initiale est configurée pour acquérir la valeur de réactivité initiale lorsque la réactivité du réacteur est stable, la partie supérieure du cœur de réacteur désigne le sommet du réacteur ;
dans lequel le module d'acquisition de valeur finale de réactivité (12) comprend en outre une seconde unité de commande de position et une unité d'acquisition de valeur finale de réactivité, la seconde unité de commande de position est configurée pour réguler la tige de commande à partir de la position initiale à l'intérieur du cœur de réacteur jusqu'à la partie inférieure du cœur de réacteur, l'unité d'acquisition de valeur finale est configurée pour acquérir la valeur finale de valeur de réactivité lorsque la réactivité du réacteur est stable, la partie inférieure du cœur de réacteur désigne le fond du réacteur.

11. Système de mesure de distribution de puissance pour une centrale nucléaire, comprenant un dispositif de collecte de données et un dispositif de simulation expérimentale numérique, dans lequel

le dispositif de collecte de données est configuré pour collecter une valeur de réactivité initiale et une valeur finale de valeur de réactivité d'un réacteur, et transmettre la valeur de réactivité initiale et la valeur finale de valeur de réactivité au dispositif de simulation expérimentale numérique ; et
le dispositif de simulation expérimentale numérique est configuré pour réaliser le procédé de l'une quelconque des revendications 1 à 9.

12. Système selon la revendication 11, dans lequel le système comprend en outre un système d'entraînement de tige de commande, et
le système d'entraînement de tige de commande est configuré pour commander et réguler la tige de commande à partir de l'intérieur du cœur de réacteur jusqu'à la partie supérieure ou la partie inférieure du cœur de réacteur, pour permettre au dispositif de collecte de données de collecter la valeur de réactivité initiale et la valeur finale de valeur de réactivité du réacteur.

FIG. 1

an initial reactivity value of a reactor is acquired when a control rod is regulated from inside of a reactor core to a top portion of the reactor core

S100

a terminal-value reactivity value of the reactor is acquired when the control rod is regulated from the inside of the reactor core to a bottom portion of the reactor core

S200

a radial power distribution of the reactor core is acquired through the initial reactivity value, the terminal-value reactivity value, and a theoretical power of a control rod assembly corresponding to the control rod

S300

FIG. 2

the control rod is controlled and regulated from an initial position inside the reactor core to the top portion of the reactor core    S110

the initial reactivity value is acquired when the reactivity of the reactor is stable    S120

FIG. 3

the control rod is controlled and regulated from the initial position inside the reactor core to the bottom portion of the reactor core    S210

the terminal-value reactivity value is acquired when the reactivity of the reactor is stable    S220

FIG. 4

| a single rod measured value of each control rod is determined through the initial reactivity value and the terminal-value reactivity value of each control rod | S310 |

↓

| a value coefficient of each control rod is determined based on the single rod measured value and a single rod theoretical value of each control rod | S320 |

↓

| a product of a theoretical power of a control rod assembly corresponding to each control rod and the value coefficient of each control rod is determined as a measured power of the control rod assembly corresponding to each control rod | S330 |

↓

| the measured powers of the control rod assemblies corresponding to all the control rods are preprocessed, and the radial power distribution of the reactor core is obtained | S340 |

FIG. 5

| a measured power of a non-control rod assembly is fitted through the measured powers of all the control rod assemblies | S341 |

↓

| normalization processing is performed on the measured powers of all control rod assemblies and measured powers of all non-control rod assemblies, and the radial power distribution of the reactor core is obtained | S342 |

FIG. 6

FIG. 7

**EP 4 506 961 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3965121 A1
- CN 111403058 A
- CN 108492898 A
- US 2014321591 A1